# DEMANDE DE BREVET EUROPEEN

(11) **EP 2 915 420 A1**
(43) Date de publication de la demande: **09.09.2015**
(21) Numéro de dépôt: 15290053.6
(22) Date de dépôt: 27.02.2015
(51) Int. Cl.: A01C 21/00

(54) **Diagnostique de l'état physiologique de cultures agronomiques**

(30) Priorité: 03.03.2014 FR 1400515
(71) Demandeur: Polyor SARL, 54000 Nancy (FR)
(72) Inventeur: Claude, Pierre-Philippe, 54000 Nancy (FR)

(57) **Abrégé**

Diagnostique de l'état physiologique de cultures agronomiques prédisant une *variable pondérale* (VP) décrivant l'abondance de l'appareil photosynthétique à partir d'une *variable réactive* (VR) décrivant son fonctionnement comprenant ;
• l'échantillonnage et/ou le prélèvement systématique ou aléatoire de la biomasse aérienne d'une culture agronomique pour évaluer des VP et VR, soit à partir de plants individuels et/ou de superficies récoltés à titre d'échantillons d'une surface du sol arable,
• conversion de cette biomasse aérienne en équivalents superficiels agronomique, tel que g/m², de kg/ha ou tonnes/ha,
• sur ces N échantillons, la mesure d'un ensemble de N observations commensurables concernant au moins une VP et une VR,
• l'application d'un *cadre incrémentiel* comprenant un sous ensemble de *n* de ces N observations, soit [VP]n et [VR]n, et du coup l'établissement d'une mesure de la *valeur centrale* pour lesdites *n* observations,
• établissement d'une mesure de la *dispersion relative* pour ces mêmes *n* observations comprises dans ledit cadre incrémentiel,
caractérisé en ce que ;
• l'ensemble des N observations est préalablement ordonnée progressivement, trié en sorte, selon la VP à laquelle est corrélée la VR,
• lors de la détermination des valeurs centrales et/ou de dispersions relatives pour ces VP et VR à partir des sous ensembles de *n* observations comprises dans les susdits cadres incrémentiels, ceux-ci sont déplacés, glissés en sorte, après chaque détermination par un incrément régulier,
• les susdites valeurs centrales et de dispersions relatives sont mises en relation (corrélation), soit [VP]n : [VR]n.

## Description

### DOMAINE TECHNIQUE DE L'INVENTION

Agronomie, et plus particulièrement la fertilisation minérale des culture, y compris par pilotage intra - saisonnier des apport d'engrais N, P, K et Mg.

### ÉTAT DE LA TECHNIQUE

### État physiologique de la culture ; mesure pondérales et/ou réactives

L'évaluation du potentiel de rendement d'une culture agronomique (pRDT ; eg. kg-grain / ha) est recherchée. Celle-ci s'effectue généralement par diagnostique intra - saisonnier de l'état azoté du feuillage, y compris et notamment via l'indice de nutrition azoté (NNI), ou une quelconque mesure apparentée. D'éventuelles carences en azote peuvent ainsi être corrigées presque en temps réel par des apports d'engrais azotés, foliaires ou au sol.

Le Comifer 2011 à brossé un aperçu des outils de pilotage de la fertilisation azotée disponibles en France, notamment ici applicables aux grandes cultures, céréalières en particulier ; bandes "double densité" (Agro-Transfert), Jubil™ (Inra, Arvalis), Ramses™ et Ramses 2 (Invivo), PILazo (Ctifl), Yara N-Tester™ (Yara, Arvalis), Digites™ (Invivo), GPN Pilot (GPN) et Farmstar™ (Arvalis). Tous ces outils impliquent le calcul préalable, prévisionnel en sorte, d'une dose dite "X" d'engrais azotés *a priori* nécessaire au plein rendement de la culture (*cf*. pRDT). Il faut par la suite de retrancher entre 40 et 60 unités (kg-N/ha), selon l'outil, de cet dose X, et effectuer le/les susdits diagnostiques intra - saisonnier le moment venu. Si un certain seuil indicateur critique est satisfait, cette ration d'engrais azotés initialement retranchée peut être conservée à titre d'économie. Dans le cas contraire, cette ration d'azote et appliquée lors du dernier apport d'engrais N. A noter cependant qu'aucune de ces outils implique la mesure de la fluorescence chlorophyllienne. Autre fait notable ; ce pilotage intra - saisonnier est difficilement réalisable pour les autres éléments nutritifs, hormis dans une certaine mesure et qu'indirectement, le phosphore.

Or, en principe il existe deux types de telles mesures intra - saisonnières. Un premier type quantifie *pondéralement* la quantité de chlorophylle (Lopez-Bellido et al. 2004), d'azote foliaire (Izsaki et Németh 2007), voire des nitrates dans les jus de bas de tiges (Evans *et al.* 1983 ; Justes *et al.* 1997) ; ces teneurs, mesurées directement et/ou indirectement sont en principe corrélées avec le potentiel photosynthétique et donc de rendement (pRDT). Un deuxième type de mesures, y compris donc celles issues de la fluométrie (Kalaji et Guo 2008, Baker et Rosenqvist 2004), cherchent plutôt à mesurer la réactivité du *phososysytème* Il (PSII), par exemple à une impulsion lumineuse dosée précisément ; ces mesures sont donc plus fonctionnelles, interprétables que ponctuellement sans nécessairement être bien corrélées avec le rendement à la récolte de la culture. Pour résumer, les variables *pondérales, VP,* sont ;
- de types Nc (cf. NNI), Chl-a (SPAD), ou [NO3] jus de bas de tige (jbt), etc.,
- intégrales à travers le temps (campagne)
- histologiques
- peu informative de l'état de fonctionnement du PSII
- (assez ou peu) corrélées avec le pRDT,
tandis que les variables *réactives,* VR, sont elles ;
- de types Fv/Fm, Fv'/Fm', An, Gs ou Gl, etc.
- ponctuelles
- physiologiques
- informatives du l'état de fonctionnement du PSII
- peu (ou pas) corrélées avec pRDT.

Or, deux de ces variables sont particulièrement utiles en agronomie. La première, de type pondérale, développée une première fois par Justes et al. 1994 et dite NNI (nitrogen nutrition index) compare la teneur en azote du feuillage, %Na, à une valeur critique , %Nc, établie à partir d'une courbe empirique mais en principe universellement spécifique à chaque culture, y compris notamment le blé et le colza (Colenne et al. 1998). Si NNI = Na/Nc est supérieur ou égale à 1,00, l'état azoto - nutritionnel de la culture en cours est jugé satisfaisant et ne devrait pas porter atteinte à l'élaboration du potentiel de rendement. La deuxième variable, de type réactive, est le rendement quantique maximal, Fv/Fm, obtenue par mesures de la fluorescence chlorophyllienne (Baker et Rosenqvist 2004, etc.) évalue rationnellement la quantité de photons ayant contribués à l'activation du PSII (photosystème II), sans avoir été réémis sous forme d'énergienon productive (i.e. fluorescence). Cette variable, aujourd'hui facilement mesurable in situ en temps réel, et a posteriori plutôt bien corrélée au rendement agronomique (récolté), n'est cependant pas toujours très bien corrélée aux variables pondérables, et notamment la plus utile d'entres elles, NNI. Cela est du en bonne partie, il me semble, qu fiat que ces variables réactives, et Fv/Fm plus particulièrement, servent surtout à détecter ponctuellement des stresses physiologiques pouvant affecter le fonctionnement de PSII.

### Deux types de stresses physiologiques ; carences et "surchauffe"

La fluométrie est donc une méthode de diagnostique de fonctionnement du photosystème Il (PSII) via la mesure d'un certain rendement quantique, i.e. le nombre de photons impliqués dans la photosynthèse plutôt que dans la fluorescence. Or, bien que pluri - élémentaires, les mesures variables fluométriques ne permettent pas en soi de quantifier les carences nutritionnelles quelle détecte, et/ou les apports d'engrais élémentaires pouvant les combler.

Or, la capacité de la fluométrie à prédire le rendement agronomique, ou même le degré de réalisation du potentiel de rendement est limitée parce qu'elle ne sert qu'à détecter des stresses physiologiques. Ceux-ci sont de deux types. Un premier type est causé par des carences élémentaires, y comprises et notamment en azote et/ou phosphore, voire potassium ; des carences oligoélémentaires sont aussi détectables. Ce type de stresses ce caractérise par le développement chétif de la plante et de son appareil photosynthétique. Un deuxième type de stresses est causé par une certaine "surchauffe" de l'appareil photosynthétique, notamment lors fertilisations azotées intensives. Ce type de stresses ce caractérise par une surproduction de certaines espèces chimiques azotées, notamment l'oxyde d'azote (NO ; Desikan *et al.* 2002, 2003). En interaction avec *l'acide abscissique* (ABA), NO provoque, préventivement afin d'éviter une trop grande évapotranspiration, la fermeture partielle ou complète des stomates et donc des échanges gazeux nécessaire à la fixation photosynthétique du carbone.

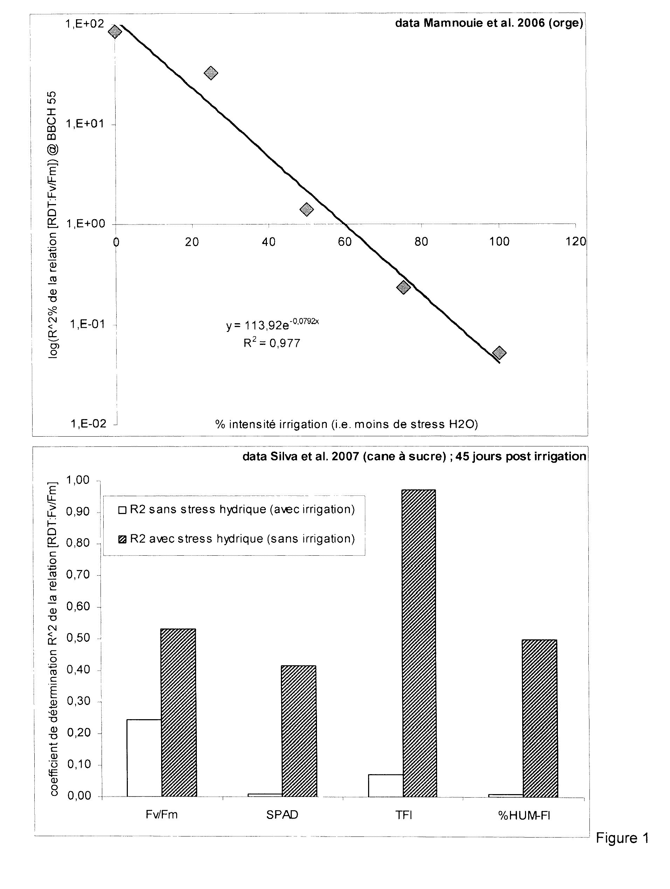

Or, en absence de tels stresses, la fluométrie, et dans une certaine mesure les autres mesures variables réactives aussi, est n'est plus très utile en agronomie puisque les variables mesurées qu'elle génère ne sont pas corrélées avec le potentiel de rendement agronomique ; à titre d'exemple, voir ici la recompilation de données publiées à la Figure 1.

### La fertilisation raisonnée ≈ détection de stresses, carences?

Or, la fertilisation raisonnée, azotée notamment, a pour vocation de faire disparaître les susmentionnés stresses. Du coup, l'utilité des susdits diagnostiques intra-saisonniers, et en particulier la fluométrie, décroît au point de devenir incapables de piloter correctement de telles fertilisation raisonnées. J'ai rapporté à la Figure 1, pour ce qui concerne les stresses hydriques nécessitant une irrigation, quelques exemples de baisses draconiennes des corrélations entre des mesures fluométriques (Fv/Fm) et leurs rendements agronomiques correspondants.

La recompilation à la Figure 1 des données de Mamnouie *et al.* 2006 pour l'orge révèlent que plus les besoins en irrigation sont satisfaits, à hauteur de 100%, moins la corrélation entre le rendement (RDT) et les mesures de Fv/Fm (mi-épiaison) est importante. Pareillement, les données de Silva *et al.* 2007 pour la cane à sucre révèlent qu'une série de variables physiologiques (Fv/Fm, SPAD, température du feuillage (TFI) et son % d'humidité (HUM-FI) ; Figure 1) sont elles aussi peut ou pas corrélées avec RDT en présence d'irrigation capable d'abolir ledit stress hydrique.

### Sigles et définitions

***variables pondérales (VP)** :* caractères histologiques, généralement ici du feuillage puisqu'il est question surtout de photosynthèse, qu'il est possible de rapporter pondéralement par rapport à la masse et/ou la superficie de la feuille et/ou du feuillage. Par exemple ici la teneur en azote (eg. mg-N/g de feuillage ; g-N/m² de feuillage), ou encore en chlorophylle (eg. *m*mol/m² de feuillage). Ces variables sont généralement liées à la teneur en N de la feuille, et ne comportent pas en soi une mesure de l'activité de la photosynthèse, bien qu'elle soit in fine assez bien corrélées avec le rendement agronomique, du moins si elles sont limitantes à travers la campagne. Ici, ce même rendement agronomique peut lui aussi être considéré comme une VP. ***variables réactives (VR)*** : caractères physiologiques, généralement ici du feuillage puisqu'il est question surtout de photosynthèse, qui traduisent l'intensité des flux et/ou échanges gazeux et/ou photoniques entre l'environnement proximal à la surface de la feuille / feuillage. Par exemple ici le rendement quantique maximal du photosystème II (PSII ; Fv/Fm), ou encore la conductivité stomatique (mmol-CO2/m²/sec). Les valeurs des VR sont très changeantes et fonction de l'intensité lumineuse, de la turgescence des cellules épidermiques, et ou de divers stresses oxidatifs ; bien qu'informatives en ce sens, elles sont difficilement intégrables sur une campagne et donc peu ou pas corrélée in fine avec le rendement agronomique.

**NNI : Fv/Fm :** relation empirique entre l'indice de nutrition azotée (NNI ; Justes et al. 1994), et le rendement quantique maximal (Fv/Fm, ou Fv/Fm), variables dites ici pondérale et réactives, respectivement, mesurées sur une culture en cours d'élaboration de son potentiel de rendement (pRDT).

**NNI100** : **Fv/Fm100 :** *idem* à NNI :Fv/Fm mais sur une base 100, les deux variables ayant été ainsi mesurées sur différents sites, sols, campagnes, voire cultures ne pouvant être directement intégrées sans normalisation à un même jeu de données sur lequel on souhait appliquer ledit cadre incrémentiel.

**[NNI100]ₙ** : **[Fv/Fm100]ₙ** *: idem* à NNI100 : Fv/Fm100, sauf qu'ici les valeurs des variables pondérales et réactives sont les moyennes des n observations comprises dans lesdits [cadres incrémentiels].

**[NNI100]ₙ** : **CS_{[FV/Fm100]n}** : les valeurs des variables, ici NNI (pondérale), normalisée sur une base 100 et *encadrées* au sens entendu, sont mise en relation avec une certaine mesure de dispersion relative, soit ici le coefficient de stabilité (1 - CV, le coefficient de variabilité) propre aux n observations ayant servit à la mesure de la variable réactive, ici Fv/Fm, et elles aussi encadrées au sens entendu.

**[NNI100]ₙ** : **[Fv/Fm100]ₙ** / **CS_{[Fv/Fm100]n}** : *idem,* mais ici les moyennes des n observations de la variable réactive normalisée et encadrée [Fv/Fm100]n comprises dans lesdits [cadres incrémentiels] est ajustée (lire : divisée) par une certaine mesure de dispersion relative, soit ici le coefficient de stabilité (1 - CV, le coefficient de variabilité) propre aux n observations ayant servit à la mesure de cette même variable réactive (Fv/Fm) elles aussi encadrées au sens entendu.

**[NNI100]ₙ** / CS_{[NNI100]n}**: [Fv/Fm100]ₙ** / **CS_{[Fv/Fm100]n} :** *idem,* sauf qu'ici la les moyennes des n observations de la variable pondérale normalisée et encadrée [NNI100]n comprises dans lesdits [cadres incrémentiels] est elle aussi ajustée (lire : divisée) par une certaine mesure de sa dispersion relative, soit ici le coefficient de stabilité (1 - CV, le coefficient de variabilité) propre aux n observations ayant servit à la mesure de cette même variable pondérale (NNI) elles aussi encadrées au sens entendu.

***cadre incrémentiel** :* série d'observations consécutives, avantageusement ordonnées progressivement, comprenant un sous ensemble de *n* observations d'un ensemble de N observations.

**BBCH :** Stades phénologiques des mono- et dicotylédones cultivées (source : BBCH Monographie, 2. Édition, 2001, Uwe Meier Centre Fédéral de Recherches Biologiques pour l'Agriculture et les Forêts (Allemagne).

***fertilisation raisonnée :*** suivi intrasaisonnier des apports fractionnés d'une dose d'engrais élémentaires précalculée, dite *dose* X, via le diagnostique plus ou moins en temps réel de l'état physiologique de la culture et sa comparaison à une état jugée optimal en terme de rendements agronomiques à terme. La fertilisation raisonnée permet de caler ces apports fractionnés de la dose X sur les besoins de la culture en cour d'élaboration de son potentiel de rendement (pRDT).

***engrais élémentaires*** : matière fertilisantes, dite pondérales, apportant une fois appliquées au sol ou au feuillages une quantité données d'éléments nutritionnels tels que l'azote (N), le phosphore (P), le potassium (K), etc., ou d'oligoéléments tels que le fer, le manganèse, etc. Le dosage de ces engrais est soit "élémentaire" (N, P, K, etc.) soit sur la base d'oxydes (P₂O₅, K₂O, MgO, etc.)

***potentiel de rendement*** (pRDT) : la production agronomique, de grains dans le cas de cultures céréalières, exportable d'une parelle / îlot agricole normalement attendue en raison d'une moyenne pluriannuelle connue. pRDT pourra ici être estimé dès la première année d'application de l'invention en extrapolant à partir d'un CV et/ou CS établi la courbe standard préétablie.

***rendement quantique maximal*** (Fv/Fm, ou encore Fv/Fm) : mesure variable de la proportion des unités chlorophylliennes du photosystème II (PSII) qui sont fonctionnelles, i.e. aptes à transformer des photons en énergie photochimique (lire : biochimique)

***rendement quantique*** (Fv'/Fm') : mesure variable de la proportion de tous les photons absorbés par la chlorophylle effectivement transformés photochimiquement en énergie biochimique

***mesure de dispersion relative :*** par opposition à une mesure de dispersion non relative telle que l'écart - type qui ne tient pas compte de la valeur centrale d'un échantillon, la moyenne notamment et par exemple.

### DIVULGATION DE L'INVENTION

### Problème technique

Bon nombre de méthodes de diagnostique de l'état nutritionnel et/ou physiologique de la plante servent surtout à révéler des conditions de stresses, hydriques, thermiques, nutritionnels, acido-basiques, *etc.* Elles servent surtout à diagnostiquer un état de stress et non à évaluer, *pondéralement,* le besoins élémentaires de la culture nécessaire à la pleine réalisation de sont potentiel de rendement. Cela est particulièrement vrai pour les mesures fluométriques de types Fv/Fm et Fv'/Fm' ; voir par exemple ici la Figure 1.

C'est précisément cette absence de corrélation de ces variables, dite *réactives,* et du rendement agronomique en situations non stressés qui représente ici l'essentiel du problème technique, d'autant plus que lors d'une fertilisation raisonnée, les stresses nutritionnels sont nécessairement quasi absents, sans pour autant que le potentiel de rendement (pRDT) soit en voie d'être atteint. La fluométrie destinée à l'évaluation ponctuelle et *in vivo* du PSII n'est pas en ce sens quantitative ; les éventuels diagnostiques ne peuvent servir à prédire le rendement éventuel en cour d'élaboration et/ou la taille des doses hectares NPK nécessaires à sa réalisation. De plus, ces mesures (ré)active telles que la fluométriques sont foncièrement variables, une quelconque tendance centrale (eg. moyenne, médiane) nécessitant un bon nombre de mesures sommes toutes très différentes, dispersées en sorte. Donc, pour ce qui concerne la prédiction des rendements agronomique en cours d'élaboration, les diagnostiques fluométriques sont donc foncièrement qualitatifs et imprécis. C'est dommage puisque la fluométrie, contrairement à d'autres types de diagnostiques de l'état nutritionnel des cultures est pluri - élémentaire.

### Solution technique

La solution techniques consiste à exploiter statistiquement des mesures de dispersions *relatives* des variables fluométriques mesurées plutôt que de relier directement ces variables à la performance agronomiques des cultures comme c'est normalement le cas aujourd'hui. Il s'avère que ces dispersions des valeurs de certaines variables fluométriques telles que le rendement quantique maximal, Fv/Fm, ou encore le rendement quantique effectif, Fv'/Fm', vont diminuer régulièrement en fonction de l'augmentation des rendements agronomiques. Ces fonctions sont établies ici, et s'avère suffisamment universelles pour faire office de standards.

Concrètement, il est question de l'utilisation d'un procédé de diagnostic de l'état physiologique d'une culture agronomique en cour d'élaboration de son potentiel de rendement caractérisée en ce qu'elle comprend ;
(i) un relevé de q mesures de variables réactives (VR), c'est à dire de caractères physiologiques, généralement du feuillage puisqu'il est question surtout de photosynthèse, qui traduisent l'intensité des flux et/ou échanges gazeux et/ou photoniques entre l'environnement proximal à la surface de la feuille et/ou du feuillage et/ou de la biomasse aérienne de ladite culture agronomique, et cela avantageusement à divers stades BBCH,
(ii) la normalisation, si nécessaire et avantageusement sur une base 100, de ces q mesures ;
(iii) le calcule d'une valeur centrale et de dispersion relative pour ces *q* mesures, la valeur q étant comprise entre 20 et 100, plus particulièrement entre 25 et 60, et avantageusement d'un point de vue pratique entre 30 et 50 ;
et qu'à l'aide de telles valeurs centrales et de dispersions relatives l'estimation de valeurs pondérales (VP), c'est à dire de caractères histologiques, généralement du feuillage puisqu'il est question surtout de photosynthèse, qu'il est possible de rapporter pondéralement (*massiquement*) par rapport à la masse et/ou la superficie de la feuille et/ou du feuillage, ou encore le rendement agronomique, par ;
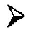 repérage sur une courbe de calibration du diagnostique de l'état physiologique de la culture agronomique en cours d'élaboration de son potentiel de rendement de la valeur de la variable pondérale (VP), lorsque la corrélation VP:VR est améliorée par la normalisation à l'intérieur dudit cadre incrémentiel comprenant *n* observations ([VR]n) et ajustée par le coefficient de stabilité de VR à l'intérieur d'un cadre incrémentiel ([VR]n / [CS]n), ou par ;
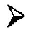 repérage sur une courbe de calibration du diagnostique de l'état physiologique de la culture agronomique en cours d'élaboration de son potentiel de rendement de la valeur de la variable pondérale (VP), ou le rendement agronomique lorsque corrélation comprend la normalisation de la variable pondérale, voire le rendement agronomique, à l'intérieur d'un cadre incrémentiel comprenant lui aussi *n* observations ([VR]n), ou encore par ;
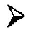 repérage sur une la courbe de calibration du diagnostique de l'état physiologique de la culture agronomique en cours d'élaboration de son potentiel de rendement de la valeur de la variable pondérale (*vP*) et/ou le rendement agronomique lorsque la corrélation comprend la division de [VR]n par le coefficient de stabilité des valeurs pondérales, voire le rendement agronomique, à l'intérieur de ce cadre incrémentiel ([VR]n / [CS]n) ;

Ces trois estimés de la VP par repérage sur une courbe de calibration sont comparés ; s'ils sont comparables à +/- 5 à 10%, la variable pondérale (VP), voire le rendement agronomique, ainsi estimée est considérée comme correcte.

La courbe de calibration du diagnostiques de l'état physiologique de cultures agronomiques en cour d'élaboration de leurs potentiels de rendement permettant de prédire une *variable pondérale* (VP) décrivant l'abondance de l'appareil photosynthétique contribuant directement au potentiel de rendement à partir d'une *variable réactive* (VR) décrivant le fonctionnement de cet appareil photosynthétique est obtenue comme suit ;
- l'échantillonnage et/ou le prélèvement systématique ou aléatoire de la biomasse aérienne d'une culture agronomique en cours d'élaboration de son potentiel de rendement de manière à pouvoir évaluer l'une et l'autre des susdites variables pondérales et réactives, soit à partir de plants individuels, soit à partir de superficies récoltés à titre d'échantillons d'une surface de sol arable sur la quelle implantée ladite culture,
- conversion de cette biomasse aérienne en équivalents superficiels agronomique, généralement sous la forme de g/m², de kg/ha ou encore de tonnes/ha (t/ha),
- sur ces N échantillons, la mesure d'un ensemble de N observations commensurables concernant au moins une variable pondérale et une variable réactive,
- l'application d'un cadre incrémentiel, c'est à dire d'une série d'observations consécutives, avantageusement ordonnées progressivement, comprenant un sous ensemble de n observations d'un ensemble de N observations, soit ici [VP]n et [VR]n, et du coup l'établissement d'une mesure de la valeur centrale pour lesdites n observations comprises dans ce cadre incrémentiel,
- établissement d'une mesure de la dispersion relative pour ces mêmes n observations comprises dans ledit cadre incrémentiel,
étant entendu que ;
- l'ensemble des N observations est préalablement ordonnée progressivement, trié en sorte, selon la variable pondérale retenue à laquelle est plus ou moins corrélée la variable réactive,
- les susdits cadres incrémentiels sont déplacés, glissés en sorte, par un incrément régulier, avantageusement de 1, après chaque détermination des valeurs centrales et de dispersions relatives pour le sous ensemble de *n* observations VP et VR comprises dans ce cadre incrémentiel,
- les susdites valeurs centrales et de dispersions relatives sont mises en relation de manière à obtenir une corrélation la plus importante, soit [VP]n : [VR]n.

Pour [VP]n et [VR]n les valeurs centrales sont divisées par les valeurs de dispersion relative pour ces mêmes variables comprise dans ledit cadre incrémentiel comprenant un sous ensemble de *n* des N observations.

Les mesures des variables pondérales et/ou réactives sont effectuées sur le feuillage, plus particulièrement dans le cas de déploiements séquentiels des feuilles sur l'une des trois dernières, et avantageusement l'une des deux dernières feuilles entièrement étalées (déployées) et visiblement en bon état phytosanitaire. Ces mesures des variables pondérales et/ou réactives décrivant l'abondance et/ou le fonctionnement de l'appareil photosynthétique de la culture est effectué entre ou aux stades BBCH 31 et 75, plus particulièrement 41 et 65, et avantageusement 51 et 59.

La variable pondérale décrivant l'abondance de l'appareil photosynthétique et/ou l'intensité des flux et/ou échanges gazeux et/ou photoniques entre l'environnement proximal à la surface de la feuille et/ou du feuillage-est choisie parmi un groupe non exhaustif comprenant entre autres les variables pondérales suivantes ;
- azote total du feuillage (eg. mg-N / kg ou m2 de feuillage), y compris donc l'NNI
- SPAD (i.e. Soil Plant Analysis Development ; eg. ∼ 20 à 70, sans unités,)
- jbt (i.e. teneurs en nitrates des jus de bas de tiges ; mg-NO₃/L)
- chlorophylle a et/ou b du feuillage (eg. mmol / m², ou mg/kg, au choix)
- Rubisco (eg. umol-CO₂ / m₂)
- rendement agronomique en grain et/ou biomasse aérienne par hectare

La variable réactive décrivant le fonctionnement de l'appareil photosynthétique est elle choisie parmi un groupe non exhaustif comprenant entre autres les variables réactives suivantes ;
- rendement quantique maximal, Fv/Fm, du PSII
- rendement quantique, Fv'/Fm', du PSII
- An (i.e. taux d'assimilation foliaire du CO₂ - mol CO₂ / m² / s
- Gl (i.e. conductivité du feuillage au CO₂ ; mol CO₂ / m² / s
- Gs (i.e. conductivité stomatique au CO₂ ; mol CO₂ / m² / s
- activité de la Rubisco (umol-CO₂ /m² / sec)

Notons que les variables pondérale et réactive de choix sont l'INNI et Fv/Fm, respectivement.

Selon le nombre N d'observations individuelles disponibles, ledit cadre délimite un nombre n d'observations individuelles suffisamment important pour permettre le calcul d'une mesure de dispersion relative, ce nombre d'observations individuelles comprises dans ledit cadre, pouvant ici varier de 2 à 25, plus particulièrement de 5 à 20, et avantageusement de 12 à 15, voire proportionnellement plus si le nombre N d'observations individuelles disponibles est important, voire ici et par exemple supérieure à 250. Si l'ensemble des N observations est constitué de sous ensembles de données, pluriannuelles ou non, provenant de divers sites, sols, îlots et/ou parcelles agricoles, voire toutes autres unités cartographiques pertinentes en agronomie, ces données sont normalisées, avantageusement et par exemple sur une base 100, par rapport à la valeur maximale, ou minimale, au choix, des observations de chaque sous ensemble de données, soit [VP100]n et/ou [VR100]n.

La mesure de dispersion relative des susdites n observations variables pondérales et/ou réactives et les susdits rendements et/ou biomasse comprises dans ledit cadre incrémentiel est le coefficient de variation (CV), ou encore le coefficient de stabilité (CS), celui-ci étant défini comme 1,00 - CV, ou encore 100% - %CV si exprimé en pourcentage, soit CS_{[vP]n} et/ou CS_{[VR]n}, ou encore CS_{[vP100]n} et/ou CS_{[VR100]n}

Notons que la mesure de la valeur centrale des susdites n observations variables pondérales et/ou réactives et les susdits rendements et/ou biomasse comprises dans ledit cadre incrémentiel est le mode, la norme, la médiane et/ou plus particulièrement et avantageusement la moyenne.

Enfin, le type de culture agronomique est choisi parmi un group comprenant les cultures céréalières telles que le blé, l'orge et l'avoine, les cultures oléagineuses telles que le colza et le tournesol, les culture protéagineuses telles que le pois et le soja, le maïs, voire les culture herbacées et fourragères.

A priori, il existe divers cas de figure. Dans le premier cas de figure, la variable pondérale (VP), avantageusement NNI, voire le rendement agronomique à la récolte plus exceptionnellement, est simplement mise en relation avec la variable réactive (VR). En générale, cette première mise en relation n'est pas suffisamment forte pour assoire un diagnostique, encore moins une préconisation. Dans le deuxième cas, ces deux variables sont normalisées, avantageusement et le plus simplement sur une base 100. En effet, ces données servant à la calibration du protocole de diagnostique provient de blocs, sols, site voire campagnes différentes. Troisièmement, on peut appliquer le susdit cadre incrémentiel comportant *n* observations préalablement ordonnée progressivement selon l'une ou l'autre des susdites variables, préférablement descriptive ; la progression de ces mesures centrales, les moyennes le plus souvent, sera ainsi plus régulière et les deux type de variables mieux corrélées qu'autrement. Le quatrième cas de figure découle en sorte du troisième, sauf que c'est maintenant une mesure de dispersions des *n* observations comprises dans le cadre incrémentiel qui sont mises en relation avec lesdites valeurs centrales de la variable descriptive. Cinquièmement, je propose d'ajuster la valeur centrale de la variable explicative (cas 3) par la valeur de la mesure de sa dispersion, ce ratio étant toujours mise en relation avec la valeur centrale de la variable descriptive correspondant au même cadre incrémentiel. Enfin, sixièmement, on peut aussi ajuster de la sorte ladite variable descriptive selon la mesure de sa dispersion.

À titre d'illustration, ici VP = NNI, et VR' = Fv/Fm ;
(1) NNI : Fv/Fm
(2) NNI100 : Fv/Fm100
(3) [NNI100]ₙ: [Fv/Fm100]ₙ
(4) [NNI100]ₙ: CS_{[FV/Fm100]n}
(5) [NNI100]ₙ: [Fv/Fm100]ₙ / CS_{[Fv/Fm100]n}
(6) [NNI100]ₙ / CS_{[NNI100]n}: [Fv/Fm100]ₙ / CS_{[Fv/Fm100]n}

Dans le premier cas, **NNI : Fv/Fm,** il s'agit d'une relation empirique entre l'indice de nutrition azotée (NNI ; Justes et al. 1994), et le rendement quantique maximal (Fv/Fm, ou Fv/Fm), variables dites ici pondérale et réactives, respectivement, mesurées sur une culture en cours d'élaboration de son potentiel de rendement (pRDT). Dans le deuxième cas, **NNI100** : **Fv/Fm100,** *idem* mais sur une base 100, les deux variables ayant été ainsi mesurées sur différents sites, sols, campagnes, voire cultures ne pouvant être directement intégrées sans normalisation à un même jeu de données sur lequel on souhait appliquer ledit cadre incrémentiel. Dans le troisième cas, **[NNI100]ₙ** : **[Fv/Fm100]ₙ** *idem* à NNI100 : Fv/Fm100, sauf qu'ici les valeurs des variables pondérales et réactives sont les moyennes des n observations comprises dans lesdits [cadres incrémentiels]. Pour le quatrième cas, **[NNI100]ₙ** : **CS**_{[FV/Fm100]n}, les valeurs des variables, ici NNI (pondérale), normalisée sur une base 100 et *encadrées* au sens entendu, sont mise en relation avec une certaine mesure de dispersion relative, soit ici le coefficient de stabilité (1 - CV, le coefficient de variabilité) propre aux n observations ayant servit à la mesure de la variable réactive, ici Fv/Fm, et elles aussi encadrées au sens entendu. *Idem* pour le cinquième cas, **[NNI100]ₙ** : **[Fv/Fm100]ₙ** / **CS**_{[Fv/Fm100]n}, sauf qu'ici les moyennes des n observations de la variable réactive normalisée et encadrée [Fv/Fm100]n comprises dans lesdits [cadres incrémentiels] est ajustée (lire : divisée) par une certaine mesure de dispersion relative, soit ici le coefficient de stabilité (1 - CV, le coefficient de variabilité) propre aux n observations ayant servit à la mesure de cette même variable réactive (Fv/Fm) elles aussi encadrées au sens entendu. Enfin sixièmement, le cas le plus complexe, **[NNI100]ₙ** / **CS_{[NNI100]n}: [Fv/Fm100]ₙ** / **CS_{[Fv/Fm100]n},** est *idem* au précédent, sauf qu'ici la les moyennes des n observations de la variable pondérale normalisée et encadrée [NNI100]n comprises dans lesdits [cadres incrémentiels] est elle aussi ajustée (lire : divisée) par une certaine mesure de sa dispersion relative, soit ici le coefficient de stabilité (1 - CV, le coefficient de variabilité) propre aux n observations ayant servit à la mesure de cette même variable pondérale (NNI) elles aussi encadrées au sens entendu.

A noter qu'ici idéalement, NNI peut être remplacé par le rendement et/ou la production de biomasse aérienne de la culture, bien que dans la pratique, une variable rationnelle telle que NNI est plus pratique.

### Avantages apportés

L'invention permet de combiner les caractéristiques d'une VR telle que la fluométrie, une analyse *pluri-élémentaire,* non destructive, liée au fonctionnement de l'appareil photosynthétique, à ceux de méthodes plus pondérales comme Jubil™ permettant d'apprécier l'élaboration du potentiel de rendement mais limité à un diagnostique strictement azoté. Il est ainsi possible de suivre l'élaboration de ce potentiel de rendement, tout en diagnostiquant d'éventuelles carences *oligo-élémentaires.*

### BRÈVE DESCRIPTION DES DESSINS ET FIGURES

**Figure 1** **:** Coefficients de détermination (R²) des relations linéaires entre Fv/Fm et le rendent agronomique à la récolte d'une culture orge (***haut** ;* Mamnouie *et al.* 2006) et de cane à sucre (***bas** ;* Silva *et al.* 2007) selon l'intensité et/ou la présence de stress hydriques levés par irrigation. Cette absence de déterminisme de la fluométrie en absence de stresses qui représente un aspect du problème technique.

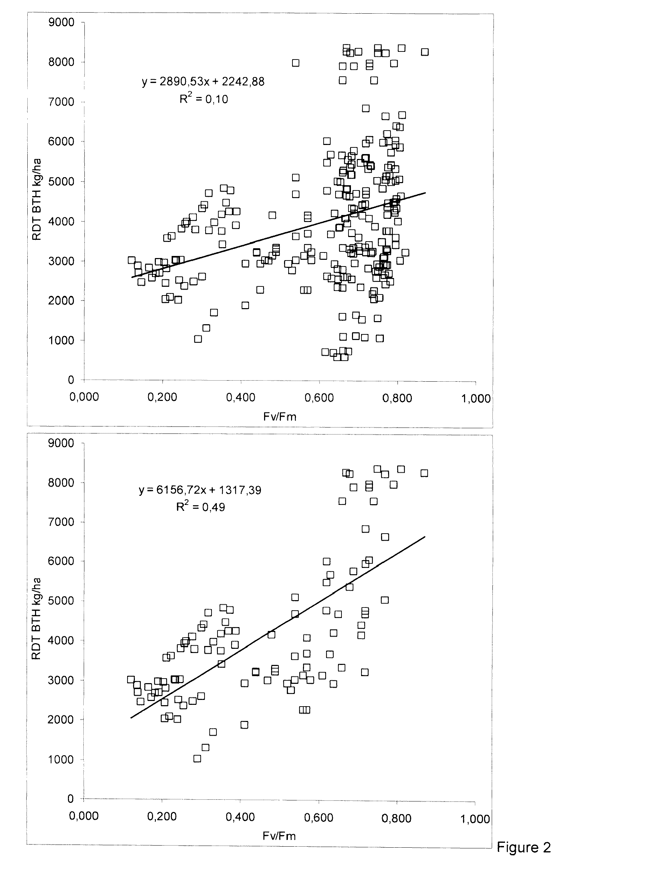

**Figure 2** **:** Relations progressives décrivant l'augmentation des rendements de blés selon l'augmentation des rendements quantiques maxima, Fv/Fm ; cf. Tableau 1 pour les sources de ces données. Pour la figure du haut, l'ensemble des 250 observations, dont une portion est présentée au Tableau 2, ont été utilisées ; pour la figure du bas, seules les observations comportant des mesures de Fv/Fm avant ou au stades BBCH 55-59 ont été utilisées.

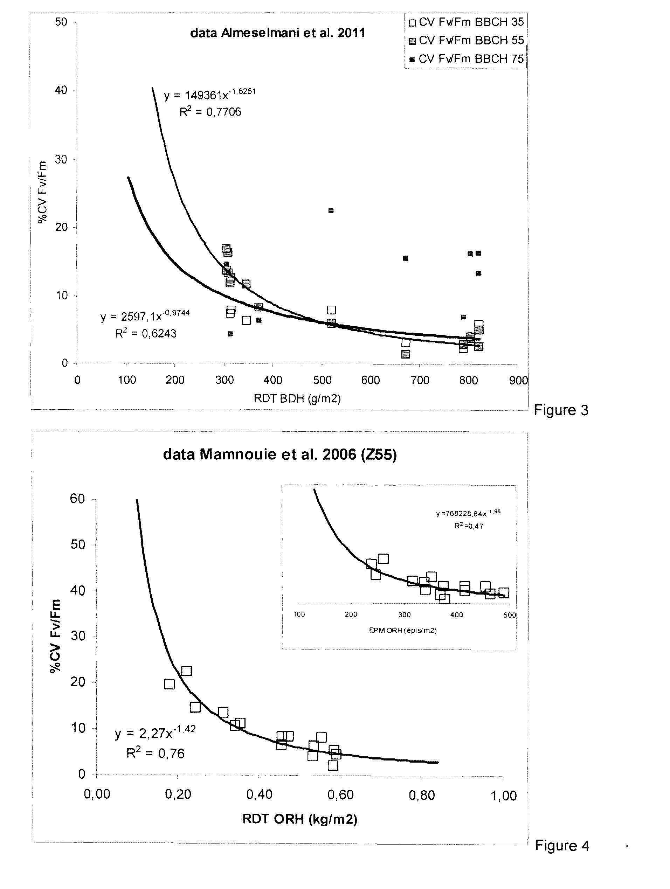

**Figure 3** **:** Relations dégressives entre la variabilité (%CV) d'une mesure fluométrique, ici et par exemple le rendement quantique maxima, Fv/Fm, et une variable agronomique telle que le rendement (RDT ; g/m2) d'un blé dur d'hiver (BDH ; données Almeselmani *et al.* 2011). Fv/Fm à été mesuré à deux stades des croissance BBCH, 35 (mi-élongation de la tige principale) et 55 (mi-épiaison de la tige principale) ; ce déterminisme n'est plus à BBCH 75.
**Figure 4** **:** Relations dégressives entre la variabilité (%CV) d'une mesure fluométrique, ici et par exemple le rendement quantique maxima, Fv/Fm, et une variable agronomique telle que le rendement (RDT ; g/m²) et le nombre d'épi (EPM ; épis/m²) d'un orge d'hiver (ORH ; données Mamnouie *et al.* 2006) ; dans les deux cas Fv/Fm à été mesuré au stade de croissance BBCH 55 (mi-épiaison de la tige principale).

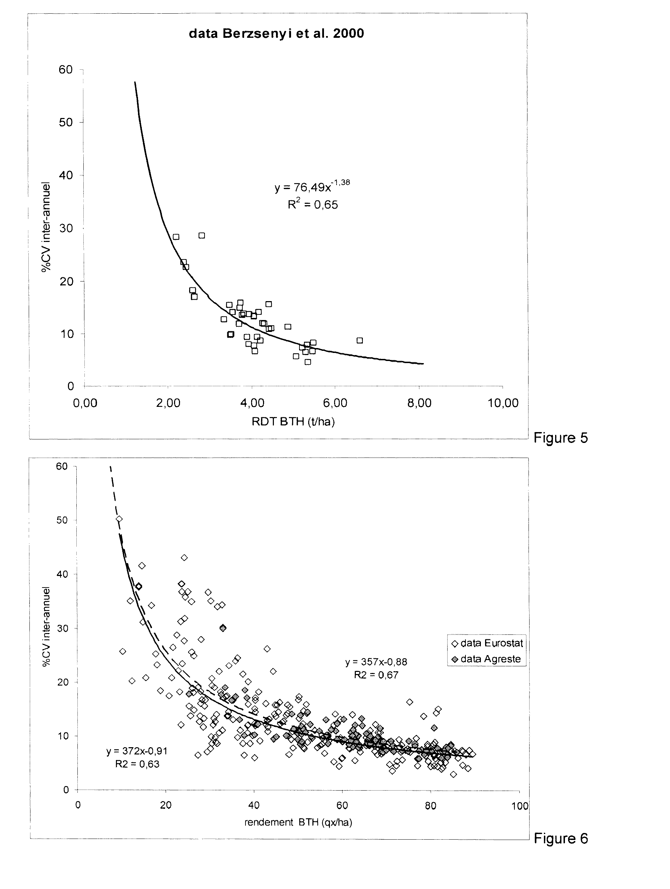

**Figure 5** **:** Relation dégressive décrivant la variabilité (coefficient de variation interannuel ; %CV) des rendements agronomiques (RDT) d'une culture de blé tendre d'hiver (BTH ; t/ha) en fonction de leurs importances (données de Berzsenyi *et al.* 2000). Il s'agit ici d'un essai longue durée (1961-1998) sur un site Hongrois.
**Figure 6** **:** Relations dégressives décrivant la variabilité interannuelle (%CV) des rendements en blé tendre d'hiver (BTH ; qx/ha) aux niveaux départemental (en France de 1989 à 2011) et régional (en Europe de 1997 à 2008). A noter que les deux courbes sont très similaires, et cela malgré une grande disparité géographique, climatique et administrative des unités statistiques.

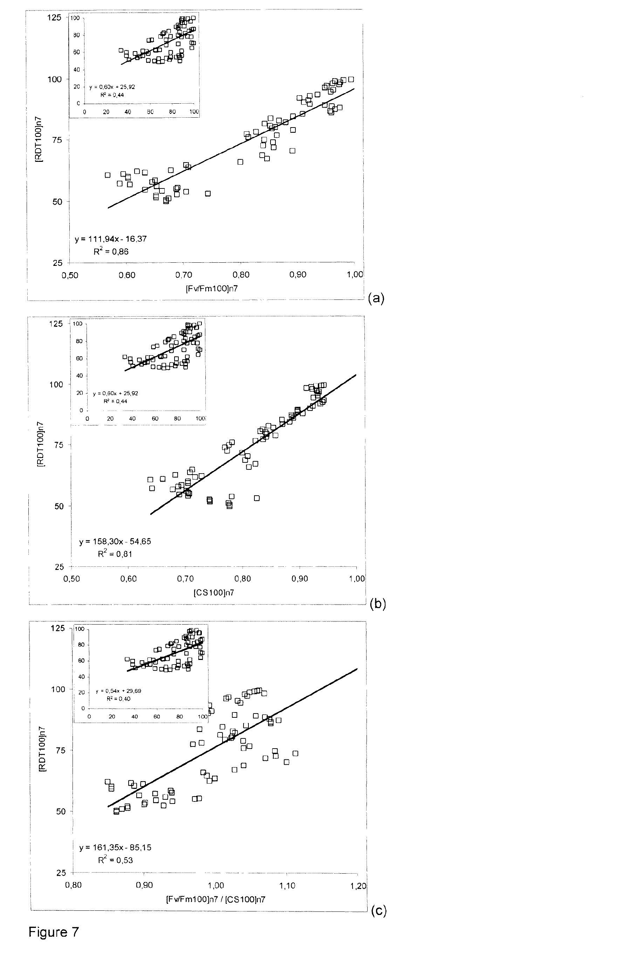

**Figure 7** **:** Augmentations progressives des rendements de blé (données aux Tableaux 1 et 3) normalisés et encadres ([RDT100]n7) par rapport, (a) au valeurs Fv/Fm elles aussi normalisées et encadrées ([Fv/Fm100]n7), (b) aux *coefficients de stabilité* associées à ces (7) valeurs de Fv/Fm normalisées et encadrées ([CS100]n7), et (c) aux valeurs de [Fv/Fm100]n7 ajustées (divisées) par [CS100]n7. A noter que les CS est simplement définis comme 1,000 moins les CV des mesures Fv/Fm normalisées et encadrées. Seules les observations comportant des mesure de Fv/Fm avant ou au stades BBCH 55 ont été utilisées dans une cadre incrémentiel comprenant ces sous ensembles de n = 7 observations. En abîmes, les mêmes types de relations mais par rapport aux rendements et Fv/Fm normalisés (sur base 100) mais non encadrée ; à noter que les coefficients de détermination, R², dans tous les cas inférieurs sans cet encadrement normatif.

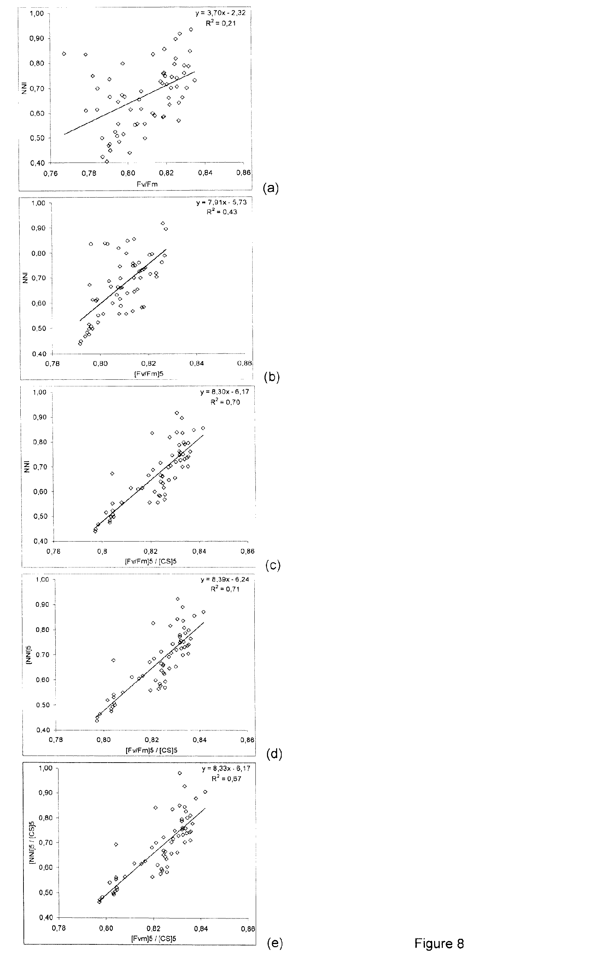

**Figure 8** **:** Application du cadre incrémentiel et de l'ajustement de la variable explicative (Fv/Fm) selon la mesure de sa dispersion à l'intérieur de ce cadre pour une culture de blé tendre d'hiver (récolte 2013). La corrélation NNI:Fv/Fm (a) est nettement améliorer si ces valeurs de Fv/Fm sont à l'intérieur d'un cadre incrémentiel *n* = 5 ([Fv/Fm]5) (b) ; elle l'est d'autant plus si les valeurs de [Fv/Fm]5 sont ajustées par le coefficient de stabilité de Fv/Fm à l'intérieur de ce cadre ([Fv/Fm]5 / [CS]5) (c). Il est aussi possible d'améliorer d'avantage cette corrélation en normalisant aussi la variable descriptive NNI à l'intérieur d'un cadre incrémentiel comprenant lui aussi *n* = 5 observations ([NNI]5) (d). Enfin, et dans ce cas ci, diviser [NNI]5 par le coefficient de stabilité des valeurs NNI à l'intérieur de ce cadre ([NNI]5 / [CS]5) (e) n'a pas été très utile, la corrélation résultante étant pour l'essentielle inchangée par rapport à (d), vraisemblablement du fait qu'il y a nécessairement quelques point variables en moins. Nb. Le nombre d'observations total est de 65 ; données au Tableau 4) ; à noter qu'ici il n'a pas été nécessaire de normaliser sur une base 100, les données provenant toutes d'une même campagne, bien que de trois parcelles de blé tendre d'hiver différentes à deux stades BBCH.

### MODE DE RÉALISATION PRÉFÉRÉ DE L'INVENTION

L'invention permet de diagnostiquer, d'évaluer en sorte, l'état physiologique d'une culture agronomique en cours, et donc le degré de réalisation de son potentiel de rendement (pRDT). Pour ce faire, elle revendique l'utilisation de la fluométrie, et plus particulièrement le ration Fv/Fm à titre de rendement quantique maximal, ce qui est inédit puisque a priori Fv/Fm n'est pas suffisamment corrélé avec le rendement agronomique récolté, du moins en absence de stresses physiologiques affectant appréciablement ladite réalisation du pRDT (*cf*. supra, et Figure 1).

Pour illustrer la plausibilité de la réalisation de l'invention, j'ai utilisé deux jeux de données. Un premier jeu comprenant des données publiées sur le semblant de corrélation entre les rendements agronomique de céréales, des blés pour l'essentiel, et une série de mesures in situ (au champ) de Fv/Fm en cours de campagne (*cf*. Tableaux 1 et 3). Un deuxième jeu comprend luis des données originales provenant de trois (3) parcelles de blés tendres d'hiver (BTH) prélevées sur des plants individuels à deux stades BBCH, 51 et 61, au cours de l'été 2013 en Alsace (France). Il fut ainsi possible d'établir cette fois-ci une corrélation entre les indices de nutrition azotée (NNI ; Justes et. al. 1994) et une mesure simultanée de Fv/Fm (cf. Tableau 4) ; relier ainsi NNI et Fv/Fm est plus pratique entant que diagnostique.

### (1) Premier jeu de données ; données publiés RDT : Fv/Fm (cf. Tableau 1)

Les données ayant servies ici et à titre d'exemple à établir lesdites courbes standards sont référencées au Tableau 1. Ces données proviennent de diverses régions du monde de manière à permettre de mieux documenter une certaine *universalité* de telles courbes. Chacune de 250 observation à reçu ici un numéro unique. Les rendement en g ou kg / m² sont converties en kg de grain par hectare (kg/ha). Pour chaque groupe de valeurs selon la référence, il y en an neuf (9) ici (*cf*. Tableau 1), la valeur maximale est identifiée et posée comme égale à 100 ( = 100) ; c'est par rapport à celles-ci que les autres valeurs d'un même groupe seront *normalisées* sur base 100 ( : 100). *Idem* pour les mesures des rendements quantiques maxima (Fv/Fm).

**Tableau 1 : Sources et caractéristiques des jeux de données comportant en tout ici et à titre d'exemple 250 observations ; voir aussi les Tableaux 2 est 3.**

| **Référence** | **Culture** | **stade de relevée Fv/Fm** | **BBCH** | **Pays** | **Commentaires** |
|---|---|---|---|---|---|
| Jiang *et al.* 2004 | blé tendre d'hiver (BTH) | remplissage des grains | 75 | Chine | groupe I |
| Jiang *et al.* 2004 bis | blé tendre d'hiver (BTH) | remplissage des grains | 75 | Chine | groupe II |
| Mamnouie *et al.* 2006 | orge d'hiver (ORG) | mi-épiasion | 55 | Iran | na |
| Almeselmani *et al.* 2001 | Blé dur d'hiver (BDH) | mi-montaison | 35 | Syrie | na |
| Almeselmani *et al.* 2001 | Blé dur d'hiver (BDH) | mi-épiasion | 55 | Syrie | na |
| Almeselmani *et al.* 2001 | Blé dur d'hiver (BDH) | remplissage des grains | 75 | Syrie | na |
| Elhani *et al.* 2000 | Blé dur d'hiver (BDH) | mi-épiasion | 55 | Espagne | effet thermique |
| Romena et Najaphy 2012 | blé tendre d'hiver (BTH) | remplissage des grains | 75 | Iran | sans irrigation |
| Romena et Najaphy 2012 | blé tendre d'hiver (BTH) | remplissage des grains | 75 | Iran | avec irrigation |

Il fallut ordonner progressivement les observations selon leurs rendements agronomiques par hectare. Par la suite, le glissement incrémentiel et régulier du cadre incrémentiel par incréments de une observations. Ce cadre incrémentiel peut ainsi comprendre un sous groupe de *n* = 3 à 15 d'observations individuelles génère ainsi une série de moyennes, écarts-types et CV desdits n observations ; j'ai tenté de représenter graphiquement ce glissement au Tableau 2, lorsque n = 7 ;

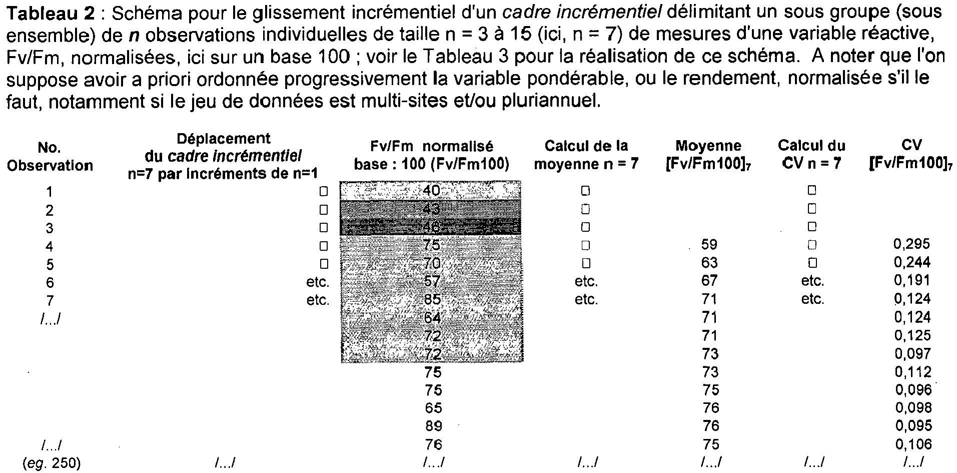

En principe ce cadre peut être appliqué à des variables pondérales, et/ou sans normalisation sur base 100. On peut ainsi générer une série de moyennes, de coefficients de variation (CV) et de stabilité (CS = 1 - CV) comportant *n* observations. *Idem* pour les mesures des rendements agronomiques (RDT ; kg/ha) à la récolte ; Tableau 3. Ce cadre incrémentiel est donc une composante centrale de l'activité inventive de la présente invention.

Ces observations comprenant un sous ensemble de *n* observations d'un ensemble de N observations, constitué ici et à titre d'exemple de prélèvement de plant individuels de différentes parcelles à différentes dates conforment aux stades BBCH spécifiés. Le cadre comprenant lesdits n observations est déplacé, *glissé* en sorte, par incréments réguliers, avantageusement de 1, et les valeurs centrales et de dispersions pour ces *n* observations comprises dans le cadre à chacune des positions établies. Ce cadre incrémentiel peut s'appliquer aux variables pondérales et réactives, et comprendre n = 3 (minimum), voire autant d'observations nécessaires au *lissage* recherché, soit généralement et avantageusement de 7 à 12. Comme de raison, le nombre N d'observations comparables sera réduit de n-1 puisque les valeurs extrêmes inférieures et supérieures ne pourront être ainsi encadrées.

Enfin, ici ce cadre est nécessairement appliqué aux N observations une fois celles-ci ordonnées progressivement selon la variable réactive (explicative ; eg. Fv/Fm) que l'on cherche à mettre en relation avec la variables pondérale (descriptive ; eg. NNI). Ce cadre de dimension n est donc ainsi "glissé" par incréments réguliers de manière à obtenir une série de moyennes, écarts-types et coefficients de variations (CV) pour les n valeurs de RDT et Fv/Fm comprises dans ce cadre. Selon le nombre d'observations disponibles, soit ici 250, le nombre d'observations comprises dans ce cadre, peut varier de 3 à 12, 15, voire plus si le nombre d'observations est important.

Nous observons donc à la Figure 7 des augmentations progressives des rendements de blé (données aux Tableaux 1 et 3) normalisés et encadres ([RDT100]n7) par rapport, (a) au valeurs Fv/Fm elles aussi normalisées et encadrées ([Fv/Fm100]n7), (b) aux coefficients de stabilité associées à ces (7) valeurs de Fv/Fm normalisées et encadrées ([CS100]n7), et (c) aux valeurs de [Fv/Fm100]n7 ajustées (divisées) par [CS100]n7. A noter que les CS est simplement définis comme 1,00 moins les CV des mesures Fv/Fm normalisées et encadrées. Seules les observations comportant des mesure de Fv/Fm avant ou au stades BBCH 55 ont été utilisées dans une cadre incrémentiel comprenant ces sous ensembles de n = 7 observations. En abîmes, les mêmes types de relations mais par rapport aux rendements et Fv/Fm normalisés (sur base 100) mais non encadrée ; à noter que les coefficients R² sont dans tous les cas inférieurs sans cet encadrement.

La progression des ces moyennes encadrées n'est pas aléatoire puisque les observations, ici 250 que comporte un tel jeu de données ont préalablement été ordonnées progressivement selon leurs rendements agronomiques. Dans le cas d'une compilation de données hétérogènes, par exemple provenant de sources, pays, voire de cultures différentes comme c'est le cas ici, il fallut *normaliser,* avantageusement sur une base 100, chaque groupe de données par rapport à la valeur maximale = 100. Par exemple, il y a ici neuf (9) groupes de données (Tableau 1), et donc autant de maxima par rapport auxquels il faut normaliser les autres valeurs RDT et Fv/Fm du groupe. De cette manière il est possible de traiter dans son ensemble ces 250 observations.

Il faut néanmoins par la suite observer attentivement si ces groupes de données, ainsi normalisés, sont commensurables. Par exemple ici, les RDT qui représentent *moins de* 50% des RDT maxima, ou encore les mesures Fv/Fm établies *après* le stade BBCH 55 (mi épiaison pour les céréales) sont vraisemblablement de nature différentes, voire peu ou pas pertinentes ; elles peuvent être omises de l'analyse afin d'en améliorer la pertinence et la précisions. C'est que j'ai fait ici avec les données partiellement rapportées au Tableau 3, graphiquement à la Figure 7. Il est en effet insensé de prétendre piloter à l'aide d'une fertilisation raisonnée une rendement agronomique qui est en voie d'atteindre au plus 50% du potentiel de rendement de la parcelle. En de telles situations, la culture est vraisemblablement stressés outre mesure, et ont ne peut pas véritablement parler de fertilisation raisonnée.

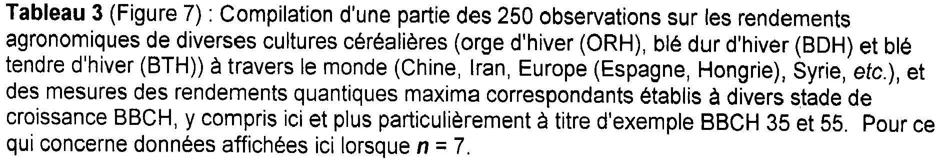

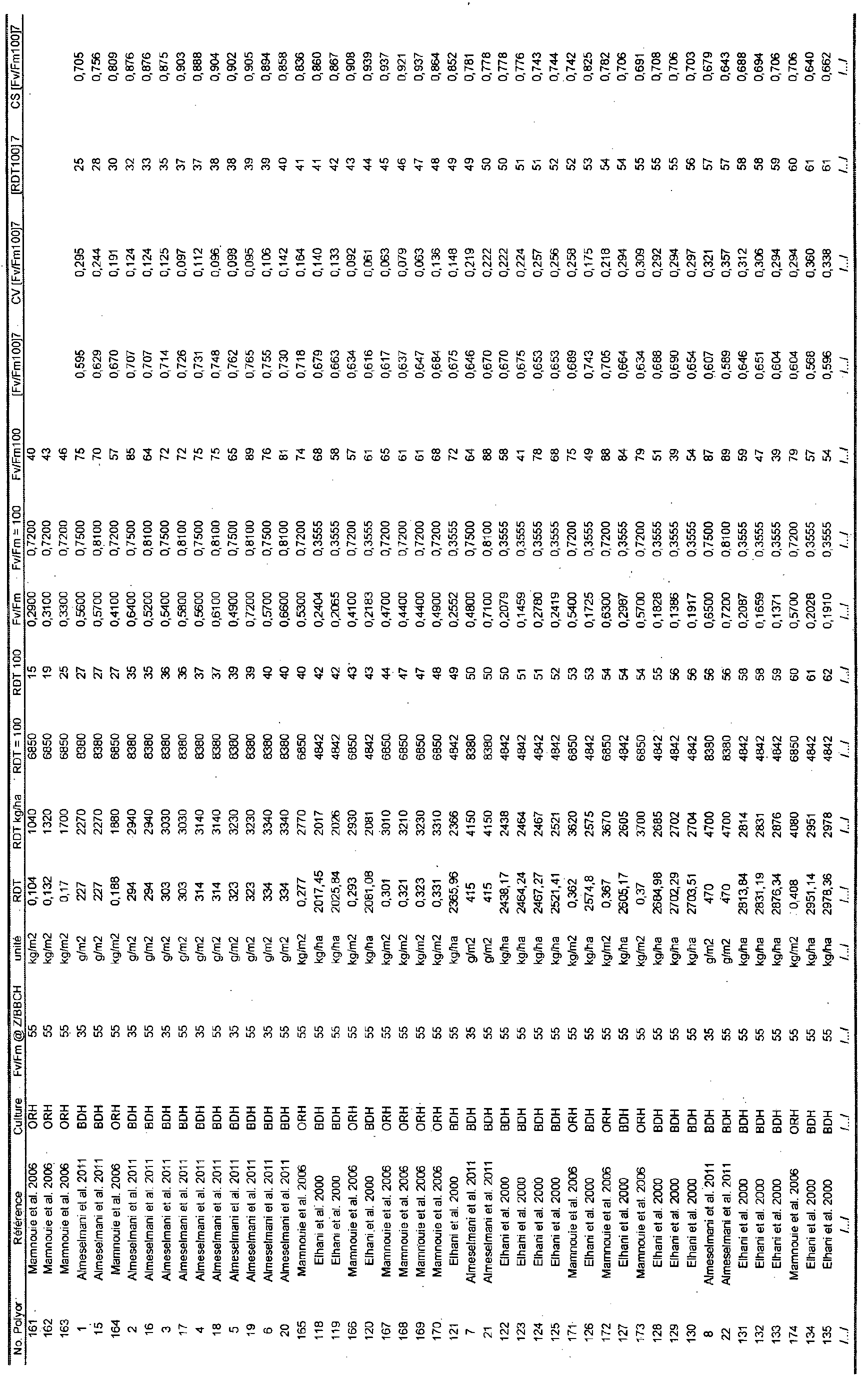

Pour situer par rapport à ces courbes l'état de la culture en cours d'élaboration d'un rendement agronomique quelconque, il faut effectuer une séries de mesures d'au moins un des variables pondérales et/ou réactives proposées. Chaque série comportera suffisamment de mesures pour estimer une mesure de la dispersion sous forme de CV et/ou CS, soit ici avantageusement d'au moins 12 à 15 mesures. Selon la taille, la disposition, la forme et l'hétérogénéité supposée de la parcelle et/ou îlot agricole, le nombre de mesures et leurs situations (localisation) devront être adaptées selon les règles de l'art. Le potentiel de rendement agronomique (pRDT) ainsi estimée inférieur à 100% entraînera nécessairement une préconisation d'engrais azoté. Par exemple, un pRDT estimé à 90% des 75 qx de blé attendus justifie une préconisation de 7,5 qx/ha x 3 kg-N/qx ≈ 22,5 kg-N/ha.

Notons enfin quelques précautions. Parfois, l'ajustement de [Fv/Fm100]n par [CS100]n n'est pas particulièrement utile (cf. Figure 7c), c'est que la dispersion des valeurs de Fv/Fm augmente selon la grandeur de ces valeurs (Cao et al. 2012 ; Fryer et al. 1998), et cela contrairement à celles des rendements agronomiques qui elles sont de moins en moins variables à mesure qu'elles augmentent (eg. Figures 5 et 6). En sorte, ces deux tendances contraires s'annulent, et l'ajustement par CS devient, dans le cas des relations RDT:Fv/Fm du moins, superflue. Cela n'est plus nécessairement le cas avec les relations NNI:Fv/Fm.

### (2) Deuxième jeu de données ; données originales NNI : Fv/Fm (cf. Tableau 4)

Les données provenant des prélèvements de plants individuels de blé tendre d'hiver (BTH) à deux dates différentes (14 juin et 3 juillet 2013) aux stades BBCH 51 et 61, respectivement, sur trois parcelles (témoin, Traité et "INNO") sont rapportées au Tableau 4. Le rendements quantique maximal (Fv/Fm) a été mesuré sur plants fraîchement prélevés ; une fois séchés leurs poids sec ont servis à la détermination des NNI via le dosage de l'azote total de la matière sèche des partie aériennes, et la transformation des poids individuel en tonnes de MSPA par hectare à l'aide de la formule logistique *MSPA = 30 · (1*/*(1* + *7,7 · EXP*(-*0,02 · PSP))) -* 3,4, lorsque PSP et le poids spécifique du plant (g/plant). Le NNI est lui défini comme le ratio Na/Nc, Na étant le % en N de la MSPA, et *Nc = 5,35MSPA^{-0.442}* (Justes et al. 1994).

Or, comme nous pouvons le voir ici à la Figure 8, l'application du cadre incrémentiel et de l'ajustement de la variable explicative (Fv/Fm) selon la mesure de sa dispersion à l'intérieur de ce cadre pour une culture de blé tendre d'hiver (récolte 2013). La corrélation NNI:Fv/Fm (a) est nettement améliorer si ces valeurs de Fv/Fm sont normalisées à l'intérieur d'un cadre incrémentiel n = 5 ([Fv/Fm]5 ; b) ; elle l'est d'autant plus si [Fv/Fm]5 est divisée par le coefficient de stabilité de Fv/Fm à l'intérieur de ce cadre ([Fv/Fm]5 / [CS]5 ; c). Il est aussi possible d'améliorer d'avantage cette corrélation en normalisant aussi la variable descriptive NNI à l'intérieur d'un cadre incrémentiel comprenant lui aussi n = 5 observations ([NNI]5 ; d). Enfin, et dans ce cas ci, diviser [NNI]5 par le coefficient de stabilité des valeurs NNI à l'intérieur de ce cadre ([NNI]5 / [CS]5 ; e) n'a pas été très utile, la corrélation résultante étant pour l'essentielle inchangée par rapport à (d), vraisemblablement du fait qu'il y a nécessairement quelques point variables en moins. Nb. Le nombre d'observations total est de 65 ; données au Tableau 4).

**Tableau 4 : Prélèvements de plants individuels de blé tendre d'hiver (BTH) à deux dates différentes (14 juin et 3 juillet 2013) aux stades BBCH 51 et 61, respectivement, sur trois parcelles (témoin, Traité et INNO).**

| ***Date prélèvement*** | ***Modalité*** | ***MS*/*plant*** | ***t*/*ha*** | ***Nc*** | ***NNI*** | ***Fv*/*Fm*** | ***[Fv*/*Fm]5*** | ***[CS5] Fv*/*Fm*** | ***[Fv*/*Fm5]*/*[CS]5*** | ***[NNI]5*** | ***[CS]5 NNI*** | **[*NNI]*5/[CS5** |
|---|---|---|---|---|---|---|---|---|---|---|---|---|
| 3-juil.-13 | témoin | 12,88 | 15,10 | 2,33 | 0,40 | 0,7891 | | | | | | |
| 3-juil.-13 | témoin | 8,98 | 13,75 | 2,45 | 0,43 | 0,7869 | | | | | | |
| 3-juil.-13 | Traité | 8,70 | 13,64 | 2,46 | 0,44 | 0,8010 | 0,7916 | 0,9931 | 0,7972 | 0,4376 | 0,9445 | 0,4633 |
| 3-juil.-13 | témoin | 13,80 | 15,37 | 2,31 | 0,45 | 0,7910 | 0,7920 | 0,9933 | 0,7973 | 0,4518 | 0,9545 | 0,4733 |
| 3-juil.-13 | témoin | 10,72 | 14,40 | 2,39 | 0.47 | 0,7902 | 0,7937 | 0,9942 | 0,7984 | 0,4635 | 0,9606 | 0,4825 |
| 3-juil.-13 | témoin | 9,76 | 14,05 | 2,42 | 0,48 | 0,7908 | 0,7953 | 0,9901 | 0,8033 | 0,4751 | 0,9622 | 0,4938 |
| 3-juil.-13 | témoin | 14,70 | 15,63 | 2,29 | 0,48 | 0,7957 | 0,7945 | 0,9891 | 0,8032 | 0,4850 | 0,9722 | 0,4989 |
| 14-juin-13 | Traité | 13,07 | 15,16 | 2,33 | 0,50 | 0,8089 | 0,7953 | 0,9895 | 0,8038 | 0,4928 | 0,9738 | 0,5060 |
| 3-juil.-13 | témoin | 14,21 | 15,49 | 2,30 | 0,50 | 0,7868 | 0,7968 | 0,9900 | 0,8048 | 0,5008 | 0,9763 | 0,5130 |
| 3-juil.-13 | Traité | 14,15 | 15,47 | 2,31 | 0,51 | 0,7946 | 0,7964 | 0,9899 | 0,8045 | 0,5090 | 0,9779 | 0,5205 |
| 14-juin-13 | Traité | 9,62 | 14,00 | 2,42 | 0,52 | 0,7979 | 0,7954 | 0,9921 | 0,8017 | 0,5198 | 0,9609 | 0,5409 |
| 3-juil.-13 | témoin | 11,66 | 14,72 | 2,36 | 0,52 | 0,7937 | 0,7990 | 0,9934 | 0,8043 | 0,5314 | 0,9584 | 0,5545 |
| 3-juil.-13 | témoin | 14,37 | 15,54 | 2,30 | 0,55 | 0,8039 | 0,7991 | 0,9936 | 0,8043 | 0,5413 | 0,9636 | 0,5618 |
| 3-juil.-13 | Traité | 12,17 | 14,88 | 2,35 | 0,56 | 0,8051 | 0,8014 | 0,9917 | 0,8080 | 0,5497 | 0,9741 | 0,5643 |
| 3-juil.-13 | Traité | 10,22 | 14,22 | 2,40 | 0,56 | 0,7952 | 0,8079 | 0,9858 | 0,8196 | 0,5584 | 0,9893 | 0,5645 |
| 3-juil.-13 | témoin | 15,47 | 15,84 | 2,28 | 0,56 | 0,8090 | 0,8108 | 0,9852 | 0,8230 | 0,5647 | 0,9797 | 0,5763 |
| 14-juin-13 | Traité | 8,48 | 13,55 | 2,46 | 0,57 | 0,8264 | 0,8135 | 0,9853 | 0,8257 | 0,5703 | 0,9762 | 0,5842 |
| 14-juin-13 | Traité | 6,75 | 12,77 | 2,54 | 0,58 | 0,8183 | 0,8173 | 0,9921 | 0,8238 | 0,5765 | 0,9770 | 0,5901 |
| 14-juin-13 | Traité | 6,58 | 12,68 | 2,55 | 0,59 | 0,8188 | 0,8181 | 0,9935 | 0,8234 | 0,5850 | 0,9806 | 0,5966 |
| 14-juin-13 | Traité | 8,47 | 13,54 | 2,46 | 0,59 | 0,8142 | 0,8086 | 0,9790 | 0,8259 | 0,5934 | 0,9808 | 0,6050 |
| 3-juil.-13 | INNO | 10,92 | 14,47 | 2,38 | 0,60 | 0,8129 | 0,8052 | 0,9799 | 0,8217 | 0,5996 | 0,9786 | 0,6128 |
| 3-juil.-13 | Traité | 11,21 | 14,57 | 2,38 | 0,61 | 0,7786 | 0,7983 | 0,9796 | 0,8149 | 0,6056 | 0,9813 | 0,6171 |
| 3-juil.-13 | témoin | 16,36 | 16,07 | 2,26 | 0,61 | 0,8016 | 0,7969 | 0,9814 | 0,8120 | 0,6112 | 0,9889 | 0,6181 |
| 3-juil.-13 | Traité | 20,64 | 17,07 | 2,20 | 0,61 | 0,7844 | 0,7987 | 0,9781 | 0,8165 | 0,6179 | 0,9857 | 0,6268 |
| 3-juil.-13 | INNO | 7,63 | 13,18 | 2,50 | 0,62 | 0,8071 | 0,8083 | 0,9792 | 0,8254 | 0,6239 | 0,9805 | 0,6363 |
| 3-juil.-13 | INNO | 11,46 | 14,65 | 2,37 | 0,63 | 0,8217 | 0,8070 | 0,9781 | 0,8251 | 0,6302 | 0,9780 | 0,6444 |
| 3-juil.-13 | Traité | 9,75 | 14,05 | 2,42 | 0,64 | 0,8265 | 0,8113 | 0,9843 | 0,8242 | 0,6382 | 0,9774 | 0,6530 |
| 14-juin-13 | Traité | 11,43 | 14,64 | 2,37 | 0,65 | 0,7952 | 0,8142 | 0,9839 | 0,8275 | 0,6470 | 0,9830 | 0,6582 |
| 3-juil.-13 | témoin | 7,14 | 12,95 | 2,52 | 0,65 | 0,8061 | 0,8155 | 0,9824 | 0,8301 | 0,6528 | 0,9856 | 0,6623 |
| 3-juil.-13 | INNO | 10,65 | 14,37 | 2,39 | 0,66 | 0,8214 | 0,8084 | 0,9799 | 0,8250 | 0,6577 | 0,9883 | 0,6655 |
| 14-juin-13 | INNO | 3,21 | 10,52 | 2,79 | 0,66 | 0,8284 | 0,8091 | 0,9807 | 0,8250 | 0,6617 | 0,9934 | 0,6661 |
| 3-juil.-13 | témoin | 13,01 | 15,14 | 2,33 | 0,67 | 0,7909 | 0,8073 | 0,9796 | 0,8242 | 0,6655 | 0,9924 | 0,6705 |
| 3-juil.-13 | Traité | 18,77 | 16,65 | 2,22 | 0,67 | 0,7987 | 0,8045 | 0,9819 | 0,8193 | 0,6711 | 0,9840 | 0,6820 |
| 3-juil.-13 | Traité | 18,49 | 16,59 | 2,23 | 0,67 | 0,7973 | 0,7957 | 0,9894 | 0,8043 | 0,6784 | 0,9781 | 0,6936 |
| 3-juil.-13 | INNO | 7,98 | 13,33 | 2,48 | 0,69 | 0,8071 | 0,8037 | 0,9787 | 0,8211 | 0,6854 | 0,9778 | 0,7010 |
| 3-juil.-13 | Traité | 14,23 | 15,50 | 2,30 | 0,70 | 0,7846 | 0,8084 | 0,9770 | 0,8275 | 0,6924 | 0,9832 | 0,7042 |
| 14-juin-13 | Traité | 21,37 | 17,23 | 2,19 | 0,70 | 0,8307 | 0,8141 | 0,9770 | 0,8332 | 0,6987 | 0,9913 | 0,7049 |
| 3-juil.-13 | INNO | 8,73 | 13,65 | 2,45 | 0,70 | 0,8225 | 0,8167 | 0,9775 | 0,8356 | 0,7042 | 0,9901 | 0,7112 |
| 3-juil.-13 | INNO | 6,45 | 12,62 | 2,55 | 0,71 | 0,8256 | 0,8235 | 0,9941 | 0,8284 | 0,7083 | 0,9874 | 0,7173 |
| 3-juil.-13 | Traité | 11,79 | 14,76 | 2,36 | 0,72 | 0,8203 | 0,8207 | 0,9958 | 0,8242 | 0,7136 | 0,9852 | 0,7243 |
| 14-juin-13 | INNO | 8,96 | 13,74 | 2,45 | 0,72 | 0,8182 | 0,8232 | 0,9912 | 0,8305 | 0,7197 | 0,9860 | 0,7299 |
| 14-juin-13 | INNO | 11,54 | 14,67 | 2,37 | 0,73 | 0,8172 | 0,8162 | 0,9805 | 0,8325 | 0,7260 | 0,9884 | 0,7346 |
| 3-juil.-13 | INNO | 5,86 | 12,30 | 2,58 | 0,73 | 0,8348 | 0,8173 | 0,9799 | 0,8340 | 0,7311 | 0,9884 | 0,7397 |
| 3-juil.-13 | INNO | 11,23 | 14,57 | 2,38 | 0,74 | 0,7908 | 0,8183 | 0,9797 | 0,8352 | 0,7364 | 0,9896 | 0,7441 |
| 14-juin-13 | Traité | 20,39 | 17,02 | 2,20 | 0,74 | 0,8255 | 0,8187 | 0,9797 | 0,8357 | 0,7407 | 0,9907 | 0,7477 |
| 14-juin-13 | INNO | 4,58 | 11,54 | 2,67 | 0,75 | 0,8231 | 0,8082 | 0,9750 | 0,8289 | 0,7445 | 0,9926 | 0,7500 |
| 14-juin-13 | INNO | 7,61 | 13,17 | 2,50 | 0,75 | 0,8196 | 0,8137 | 0,9780 | 0,8321 | 0,7489 | 0,9915 | 0,7553 |
| 3-juil.-13 | Traité | 11,33 | 14,61 | 2,37 | 0,75 | 0,7821 | 0,8145 | 0,9771 | 0,8336 | 0,7528 | 0,9912 | 0,7596 |
| 14-juin-13 | Traité | 15,37 | 15,81 | 2,28 | 0,76 | 0,8185 | 0,8137 | 0,9776 | 0,8323 | 0,7562 | 0,9915 | 0,7627 |
| 14-juin-13 | INNO | 7,66 | 13,19 | 2,50 | 0,76 | 0,8293 | 0,8161 | 0,9756 | 0,8365 | 0,7642 | 0,9810 | 0,7791 |
| 3-juil.-13 | INNO | 6,88 | 12,83 | 2,53 | 0,76 | 0,8189 | 0,8256 | 0,9923 | 0,8320 | 0,7726 | 0,9789 | 0,7892 |
| 14-juin-13 | Traité | 10,51 | 14,32 | 2,40 | 0,79 | 0,8316 | 0,8268 | 0,9938 | 0,8319 | 0,7799 | 0,9786 | 0,7969 |
| 3-juil.-13 | INNO | 8,17 | 13,42 | 2,48 | 0,79 | 0,8295 | 0,8204 | 0,9833 | 0,8343 | 0,7874 | 0,9817 | 0,8021 |
| 14-juin-13 | INNO | 4,45 | 11,45 | 2,68 | 0,80 | 0,8245 | 0,8216 | 0,9832 | 0,8357 | 0,7987 | 0,9852 | 0,8107 |
| 3-juil.-13 | Traité | 13,66 | 15,33 | 2,32 | 0,80 | 0,7976 | 0,8110 | 0,9727 | 0,8337 | 0,8080 | 0,9770 | 0,8270 |
| 14-juin-13 | INNO | 7,21 | 12,99 | 2,52 | 0,82 | 0,8250 | 0,8078 | 0,9755 | 0,8281 | 0,8169 | 0,9762 | 0,8368 |
| 14-juin-13 | INNO | 11,00 | 14,49 | 2,38 | 0,84 | 0,7785 | 0,7963 | 0,9700 | 0,8209 | 0,8255 | 0,9795 | 0,8428 |
| 14-juin-13 | Traité | 17,87 | 16,44 | 2,24 | 0,84 | 0,8133 | 0,8033 | 0,9640 | 0,8333 | 0,8354 | 0,9873 | 0,8462 |
| 3-juil.-13 | INNO | 4,87 | 11,73 | 2,65 | 0,84 | 0,7672 | 0,8021 | 0,9652 | 0,8311 | 0,8427 | 0,9898 | 0,8514 |
| 14-juin-13 | INNO | 5,32 | 12,00 | 2,62 | 0,85 | 0,8325 | 0,8114 | 0,9683 | 0,8380 | 0,8546 | 0,9720 | 0,8793 |
| 14-juin-13 | INNO | 10,86 | 14,44 | 2,39 | 0,86 | 0,8192 | 0,8142 | 0,9672 | 0,8419 | 0,8709 | 0,9613 | 0,9059 |
| 3-juil.-13 | INNO | 5,03 | 11,83 | 2,64 | 0,90 | 0,8250 | 0,8274 | 0,9931 | 0,8332 | 0,8899 | 0,9578 | 0,9291 |
| 14-juin-13 | INNO | 17,95 | 16,46 | 2,24 | 0,92 | 0,8273 | 0,8262 | 0,9940 | 0,8312 | 0,9218 | 0,9388 | 0,9819 |
| 14-juin-13 | Traité | 7,68 | 13,20 | 2,50 | 0,93 | 0,8331 | | | | | | |
| 14-juin-13 | INNO | 13,41 | 15,26 | 2,32 | 1,01 | 0,8263 | | | | | | |

C'est donc bel et bien l'application du cadre incrémentiel appliqué à la VR Fv/Fm qui améliore le déterminisme de cette variable, cette fois ci sur NNI, soit de 21 à 43% (Figure 8 (a) et (b)). Par contre, et contrairement aux corrélations RDT:[Fv/Fm100]n7 (Figure 7), l'ajustement de [Fv/Fm100]n7 par CS (Figure 8 (c)) est ici très effective du fait que les variables Fv/Fm et NNI les plus grandes sont aussi les plus dispersées (Cao et al. 2012, Fryer et al. 1998, Justes et al. 1994). Néanmoins, les préconisations d'engrais azotés seront ici similaire à celles dans les cas des relations RDT:Fv/Fm, soit d'une vingtaine de kg-N par hectare, soit un maximum en application foliaire post BBCH 61 selon les règles de l'art, ou encore une application d'N foliaire moins importante de l'ordre de 8 kg-N par hectare (eg. Azofol™, Agronutrition SAS), avantageusement avec une quelconque agent azoto-nutritionnel (ANN ; eg. FR2941590 / EP2223586).

### APPLICATIONS BIOINDUSTRIELLES ET AGRONOMIQUES

L'invention est susceptible d'être appliquée à la fertilisation raisonnée des cultures agronomiques nécessitant un pilotage intra - saisonnier de la dose X d'engrais azotés. Elle permet, un peu comme le fait la méthode Jubil™ et les autres outils de pilotage, d'évaluer en cour de campagne si le potentiel de rendement (pRDT) est en voie d'être atteint ; dans la cas contraire, les unités d'azote initialement retranchées de la dose X, à hauteur de 40 à 60 kg-N/ha, peuvent être finalement apportées lors du dernier apport d'engrais azotés.

Cela dit, la présente invention ne permet pas plus que les autres outils de pilotage de la fertilisation azotée d'ajuster plus précisément cet ration d'engrais azotés de 40 à 60 unités que l'on espère retrancher de la dose X. Néanmoins, elle rend plus simple ce type de pilotage, certains des actuels outils de pilotage étant particulièrement onéreux en terme d'investissements, surtout en temps. Par exemple, Jubil™ nécessite le prélèvement destructif d'une soixantaine de maître brins.

Pour terminer, une précision sur la nature de l'invention. Ce qui est calibré et utilisé ici n'est pas une grille de préconisation des quantités d'engrais azotés à apporter, mais bien une mode de diagnostique de l'état azoto-nutritionnel de la culture en cours d'élaboration de son potentiel de rendement (pRDT). Les apports préconisés sont donc assez imprécis, forfaitaires en sorte, mais néanmoins parfaitement selon l'état de l'art. Par exemple, la fertilisation raisonnée avec pilotage intra-saisonnier de type Jubil™ (Challenge Agriculture SARL, France) ou N-Testeur™ (Yara SAS, France) suggère généralement de retrancher de 20 à 40 "unités" d'azote (i.e. kg-N sous forme d'engrais azoté par hectare par année) d'une certaine dose dite "X" d'engrais azotés pré - calculée sur la base des reliquats azotés dans les sols en sortie d'hiver, et cela quitte à les rapporter en fin de campagne si certains diagnostiques foliaire (Jubil™, N-Testeur™) le suggèrent. Pareillement, des apports foliaire dépassant 20 unité d'azote sont rarement, voire jamais, préconisés pour des raison de "brûlage" du feuillage ; des apports d'azote de l'ordre de 8 unités sont en ce sens plus habituels (eg. Azofol™).

### Références, bibliographie et brevets pertinents

Almeselmani, M, F Abdullah, F Hareri, M Naaesan, M Adel Ammar, O ZuherKanbar et A Alrzak Saud. 2011. Effect of Drought on Different Physiological Characters and Yield Component in Different Varieties of Syrian Durum Wheat. J. Agricultural Sci., Vol. 3, No. 3; September 2011
Ashraf, M, S Nawazish et Habib-Ur-Rehman Athar. 2007. Are Chlorophyll Fluorescence And Photosynthetic Capacity Potential Physiological Determinants of Drought Tolerance in Maize (Zea mays). Pak. J. Bot., 39(4): 1123-1131.
Baker, NR et E Rosenqvist. 2004. Applications of chlorophyll fluorescence can improve crop production strategies: an examination of future possibilities. J. Exp. Bot. 55(403): 1607-1621
Berzsenyi, Z, B Gyorffy et , DQ Lap. 2000. Effect of crop rotation and fertilisation on maize and wheat yields and yield stability in a long-term experiment. European Journal of Agronomy 13 (2000) 225-244
Cao, Q, Z Cui, X Chen, R Khosla, TH. Dao et Y Miao. 2012. Quantifying spatial variability of indigenous nitrogen supply for precision nitrogen management in small scale farming. Précision Agric (2012) 13:45-61
Colnenne, C, JM Meynard, R Reau, E Justes et A Merrien. 1998. Determination of a Critical Nitrogen Dilution Curve for Winter Oilseed Rape. Annals of Botany 81: 311-317
COMIFER 2011. Calcul de la fertilisation azotée - Groupe Azote COMIFER - Avril 2011. Comité français d'étude et de développement de la fertilisation raisonnée, Le Diamant A, 92909 Paris La Défense Cedex, Dépôt légal : Avril 2011, ISBN 978-2-910393-09-0
Desikan, R., R. Griffiths, J. Hancock et S. Neill. 2002. A new role for an old enzyme: Nitrate reductasemediated nitric oxide generation is required for abscisic acid-induced stomatal closure in Arabidopsis thaliana. PNAS 99: 16314-16318
Desikan, R., Man-Kim Cheung, Jo Bright, Dan Henson, John T. Hancock and Steven J. Neill. 2003. ABA, hydrogen peroxide and nitric oxide signalling in stomatal guard cells. J. Exp. Bot., Vol. 55, No. 395
Elhani, S., Rharrabti, Y., Garcia del Moral, L.F., Roca, L.F. 2000. Evolution of chlorophyll fluorescence parameters in durum wheat as affected by air temperature. In ; Royo C., Nachit M.M., Di Fonzo N. et Araus J.L. (eds.) - Durum wheat improvement in the Mediterranean region ; new challenges. Zaragoza: CIHEAM-IAMZ. pp.275-277
Evans, JR. 1983. Nitrogen and Photosynthesis in the Flag Leaf of Wheat (Triticum aestivum L.). Plant Physiol. 72,297-302
Fryer, MJ, JR Andrews, K Oxborough, DA Blowers et NR Baker. 1998. Relationship between CO2 Assimilation, Photosynthetic Electron Transport, and Active 02 Metabolism in Leaves of Maize in the Field during Periods of Low Temperature. Plant Physiol. 116: 571-580
Justes, E., J. M. Meynard, B. Mary, D. Plénet. 1997. Diagnosis Using Stem Base Extract: JUBIL Method. In : Diagnosis of the Nitrogen Status in Crops 1997, pp 163-187 (Editors: Dr. Gilles Lemaire et al., ISBN: 978-3-642-64506-8 (Print) 978-3-642-60684-7 (Online)
Izsáki, Z., Németh, T.K. 2007. Use of chlorophyll meter to determine the nitrogen status of winter barley (Hordeum vulgare L.). Cereal Res. Comm. 35: 521-524
Jiang, D, T. Dai, Q. Jing, W. Cao , Q. Zhou, H. Zhao et X. Fan. 2004. Effects of long-term fertilization on leaf photosynthetic characteristics and grain yield in winter wheat. Photosynthetica 42 (3): 439-446, 2004
Kalaji, HM et P Guo. 2008. CHLOROPHYLL FLUORESCENCE: A USEFUL TOOL IN BARLEY PLANT BREEDING PROGRAMS In: Photochemistry Research Progress ISBN: 978-1-60456-568-3, Ed., A. Sánchez et SJ. Gutierrez, 2008 Nova Science Publishers, Inc. Chapter 12.
Lopez-Bellido, J., C.E. Shepherd et P.B. Barraclough. 2004. Predicting post-anthesis N requirements of bread wheat with a Minolta SPAD meter Eur. J. Agron, 20 : 313-320
Mamnouie, E., R. Fotouhi Ghazvini , M. Esfahany and B. Nakhoda. 2006. The Effects of Water Deficit on Crop Yield and the Physiological Characteristics of Barley (Hordeum vulgare L.) Varieties.. J. Agric. Sci. Technol. Vol. 8: 211-219
Romena, MH et A Najaphy. 2012. Physiological characteristics and grain yield of wheat under irrigated and rain-fed conditions. Annals of Biological Research, 3(7):3178-3182 / (http://scholarsresearchlibrary.com/archive.html)
Sayar, R, H. Khemira, A. Kameli et M. Mosbahi 2008. Physiological tests as predictive appreciation for drought tolerance in durum wheat (Triticum durum Desf.). Agronomy Research 6 : 70-90.
Silva, M de A, JL Jifon , JAG Da Silva et V Sharma. 2007. Use of physiological parameters as fast tools to screen for drought tolerance in sugarcane. Braz. J. Plant Physiol., 19:193-201

## Revendications

1. Utilisation d'un procédé de diagnostic de l'état physiologique d'une culture agronomique en cour d'élaboration de son potentiel de rendement **caractérisée en ce qu'**elle comprend ;
(iv) un relevé de q mesures de variables réactives (VR), c'est à dire de caractères physiologiques, généralement du feuillage puisqu'il est question surtout de photosynthèse, qui traduisent l'intensité des flux et/ou échanges gazeux et/ou photoniques entre l'environnement proximal à la surface de la feuille et/ou du feuillage et/ou de la biomasse aérienne de ladite culture agronomique, et cela avantageusement à divers stades BBCH,
(v) la normalisation, si nécessaire et avantageusement sur une base 100, de ces *q* mesures ;
(vi) le calcule d'une valeur centrale et de dispersion relative pour ces q mesures, la valeur q étant comprise entre 20 et 100, plus particulièrement entre 25 et 60, et avantageusement d'un point de vue pratique entre 30 et 50 ;
et qu'à l'aide de telles valeurs centrales et de dispersions relatives l'estimation de valeurs pondérales (VP), c'est à dire de caractères histologiques, généralement du feuillage puisqu'il est question surtout de photosynthèse, qu'il est possible de rapporter pondéralement (*massiquement*) par rapport à la masse et/ou la superficie de la feuille et/ou du feuillage, ou encore le rendement agronomique, par ;
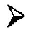 repérage sur une courbe de calibration du diagnostique de l'état physiologique de la culture agronomique en cours d'élaboration de son potentiel de rendement de la valeur de la variable pondérale (*VP*), lorsque la corrélation VP:VR est améliorée par la normalisation à l'intérieur dudit cadre incrémentiel comprenant *n* observations ([VR]n) et ajustée par le coefficient de stabilité de VR à l'intérieur d'un cadre incrémentiel ([VR]n / [CS]n), ou par ;
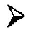 repérage sur une courbe de calibration du diagnostique de l'état physiologique de la culture agronomique en cours d'élaboration de son potentiel de rendement de la valeur de la variable pondérale (*VP*), ou le rendement agronomique lorsque corrélation comprend la normalisation de la variable pondérale, voire le rendement agronomique, à l'intérieur d'un cadre incrémentiel comprenant lui aussi *n* observations ([VR]n), ou encore par ;
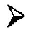 repérage sur une la courbe de calibration du diagnostique de l'état physiologique de la culture agronomique en cours d'élaboration de son potentiel de rendement de la valeur de la variable pondérale (*VP*) et/ou le rendement agronomique lorsque la corrélation comprend la division de [VR]n par le coefficient de stabilité des valeurs pondérales, voire le rendement agronomique, à l'intérieur de ce cadre incrémentiel ([VR]n / [CS]n) ;

2. Utilisation d'un procédé de diagnostic de l'état physiologique d'une culture agronomique en cour d'élaboration de son potentiel de rendement selon la revendication précédente **caractérisée en ce que** ces trois estimés de la VP par repérage sur une courbe de calibration sont comparés ; s'ils sont comparables à +/- 5 à 10%, la variable pondérale (VP), voire le rendement agronomique, ainsi estimée est considérée comme correcte.

3. Utilisation d'un procédé de diagnostic de l'état physiologique d'une culture agronomique en cour d'élaboration de son potentiel de rendement selon une quelconque des revendications précédentes **caractérisée en ce que** la courbe de calibration du diagnostiques de l'état physiologique de cultures agronomiques en cour d'élaboration de leurs potentiels de rendement permettant de prédire une *variable pondérale* (VP) décrivant l'abondance de l'appareil photosynthétique contribuant directement au potentiel de rendement à partir d'une *variable réactive* (VR) décrivant le fonctionnement de cet appareil photosynthétique est obtenue comme suit ;
• l'échantillonnage et/ou le prélèvement systématique ou aléatoire de la biomasse aérienne d'une culture agronomique en cours d'élaboration de son potentiel de rendement de manière à pouvoir évaluer l'une *et* l'autre des susdites variables pondérales et réactives, soit à partir de plants individuels, soit à partir de superficies récoltés à titre d'échantillons d'une surface de sol arable sur la quelle implantée ladite culture,
• conversion de cette biomasse aérienne en équivalents superficiels agronomique, généralement sous la forme de g/m², de kg/ha ou encore de tonnes/ha (t/ha),
• sur ces N échantillons, la mesure d'un ensemble de N observations commensurables concernant au moins une variable pondérale et une variable réactive,
• l'application d'un cadre incrémentiel, c'est à dire d'une série d'observations consécutives, avantageusement ordonnées progressivement, comprenant un sous ensemble de n observations d'un ensemble de N observations, soit ici [VP]n et [VR]n, et du coup l'établissement d'une mesure de la valeur centrale pour lesdites n observations comprises dans ce cadre incrémentiel,
• établissement d'une mesure de la dispersion relative pour ces mêmes n observations comprises dans ledit cadre incrémentiel,
étant entendu que ;
• l'ensemble des N observations est préalablement ordonnée progressivement, trié en sorte, selon la variable pondérale retenue à laquelle est plus ou moins corrélée la variable réactive,
• les susdits cadres incrémentiels sont déplacés, glissés en sorte, par un incrément régulier, avantageusement de 1, après chaque détermination des valeurs centrales et de dispersions relatives pour le sous ensemble de *n* observations VP et VR comprises dans ce cadre incrémentiel,
• les susdites valeurs centrales et de dispersions relatives sont mises en relation de manière à obtenir une corrélation la plus importante, soit [VP]n : [VR]n.

4. Utilisation d'un procédé de diagnostic de l'état physiologique d'une culture agronomique en cour d'élaboration de son potentiel de rendement selon la revendication précédente **caractérisée en ce que** pour [VP]n et [VR]n les valeurs centrales sont divisées par les valeurs de dispersion relative pour ces mêmes variables comprise dans ledit cadre incrémentiel comprenant un sous ensemble de *n* des N observations.

5. Utilisation d'un procédé de diagnostic de l'état physiologique d'une culture agronomique en cour d'élaboration de son potentiel de rendement selon une quelconque des revendications précédentes **caractérisée en ce que** les mesures des variables pondérales et/ou réactives sont effectuées sur le feuillage, plus particulièrement dans le cas de déploiements séquentiels des feuilles sur l'une des trois dernières, et avantageusement l'une des deux dernières feuilles entièrement étalées (déployées) et visiblement en bon état phytosanitaire.

6. Utilisation d'un procédé de diagnostic de l'état physiologique d'une culture agronomique en cour d'élaboration de son potentiel de rendement selon une quelconques des revendications précédentes **caractérisée en ce que** les mesures des variables pondérales et/ou réactives décrivant l'abondance et/ou le fonctionnement de l'appareil photosynthétique de la culture est effectué entre ou aux stades BBCH 31 et 75, plus particulièrement 41 et 65, et avantageusement 51 et 59,

7. Utilisation d'un procédé de diagnostic de l'état physiologique d'une culture agronomique en cour d'élaboration de son potentiel de rendement selon une quelconque des revendications précédentes **caractérisée en ce que** la variable pondérale décrivant l'abondance de l'appareil photosynthétique et/ou l'intensité des flux et/ou échanges gazeux et/ou photoniques entre l'environnement proximal à la surface de la feuille et/ou du feuillage est choisie parmi un groupe non exhaustif comprenant entre autres les variables pondérales suivantes ;
• azote total du feuillage (eg. mg-N / kg ou m2 de feuillage), y compris donc l'NNI
• SPAD (i.e. Soil Plant Analysis Development ; eg. ∼ 20 à 70, sans unités,)
• jbt (i.e. teneurs en nitrates des jus de bas de tiges ; mg-NO₃/L)
• chlorophylle a et/ou b du feuillage (eg. mmol / m², ou mg/kg, au choix)
• Rubisco (eg. umol-CO₂ / m₂)
• rendement agronomique en grain et/ou biomasse aérienne par hectare

8. Utilisation d'un procédé de diagnostic de l'état physiologique d'une culture agronomique en cour d'élaboration de son potentiel de rendement selon une quelconque des revendications précédentes **caractérisée en ce que** la variable réactive décrivant le fonctionnement de l'appareil photosynthétique est choisie parmi un groupe non exhaustif comprenant entre autres les variables réactives suivantes ;
• rendement quantique maximal, Fv/Fm, du PSII
• rendement quantique, Fv'/Fm', du PSII
• An (i.e. taux d'assimilation foliaire du CO₂ - mol CO₂ / m² / s
• Gl (i.e. conductivité du feuillage au CO₂ ; mol CO₂ / m² / s
• Gs (i.e. conductivité stomatique au CO₂ ; mol CO₂ / m² / s
• activité de la Rubisco (umol-CO₂ /m² / sec)

9. Utilisation d'un procédé de diagnostic de l'état physiologique d'une culture agronomique en cour d'élaboration de son potentiel de rendement selon une quelconque des revendications précédentes **caractérisée en ce que** les variables pondérale et réactive de choix sont l'INNI et Fv/Fm, respectivement.

10. Utilisation d'un procédé de diagnostic de l'état physiologique d'une culture agronomique en cour d'élaboration de son potentiel de rendement selon une quelconque des revendications précédentes **caractérisée en ce que**, selon le nombre N d'observations individuelles disponibles, ledit cadre délimite un nombre n d'observations individuelles suffisamment important pour permettre le calcul d'une mesure de dispersion relative, ce nombre d'observations individuelles comprises dans ledit cadre, pouvant ici varier de 2 à 25, plus particulièrement de 5 à 20, et avantageusement de 12 à 15, voire proportionnellement plus si le nombre N d'observations individuelles disponibles est important, voire ici et par exemple supérieure à 250.

11. Utilisation d'un procédé de diagnostic de l'état physiologique d'une culture agronomique en cour d'élaboration de son potentiel de rendement selon une quelconques des revendications précédentes **caractérisée en ce que** si l'ensemble des N observations est constitué de sous ensembles de données, pluriannuelles ou non, provenant de divers sites, sols, îlots et/ou parcelles agricoles, voire toutes autres unités cartographiques pertinentes en agronomie, ces données sont normalisées, avantageusement et par exemple sur une base 100, par rapport à la valeur maximale, ou minimale, au choix, des observations de chaque sous ensemble de données, soit [VP100]n et/ou [VR100]n.

12. Utilisation d'un procédé de diagnostic de l'état physiologique d'une culture agronomique en cour d'élaboration de son potentiel de rendement selon une quelconque des revendications précédentes **caractérisée en ce que** la mesure de dispersion relative des susdites n observations variables pondérales et/ou réactives et les susdits rendements et/ou biomasse comprises dans ledit cadre incrémentiel est le coefficient de variation (CV), ou encore le coefficient de stabilité (CS), celui-ci étant défini comme 1,00 - CV, ou encore 100% - %CV si exprimé en pourcentage, soit CS_{[VP]n} et/ou CS_{[VR]n}, ou encore CS[_{VP100]n} et/ou CS_{[VR100]n}

13. Utilisation d'un procédé de diagnostic de l'état physiologique d'une culture agronomique en cour d'élaboration de son potentiel de rendement selon une quelconque des revendications précédentes **caractérisée en ce que** la mesure de la valeur centrale des susdites n observations variables pondérales et/ou réactives et les susdits rendements et/ou biomasse comprises dans ledit cadre incrémentiel est le mode, la norme, la médiane et/ou plus particulièrement et avantageusement la moyenne.

14. Utilisation d'un procédé de diagnostic de l'état physiologique d'une culture agronomique en cour d'élaboration de son potentiel de rendement selon une quelconque des revendications précédentes **caractérisée en ce que** le type de culture agronomique est choisi parmi un group comprenant les cultures céréalières telles que le blé, l'orge et l'avoine, les cultures oléagineuses telles que le colza et le tournesol, les culture protéagineuses telles que le pois et le soja, le maïs, voire les culture herbacées et fourragères.
